# EUROPEAN PATENT APPLICATION

(11) **EP 1 571 593 A2**
(43) Date of publication of application: **07.09.2005**
(21) Application number: 05004428.8
(22) Date of filing: 01.03.2005
(51) Int. Cl.: G06T 5/40

(54) **Image contrast enhancement**

(30) Priority: 02.03.2004 KR 2004013931
(71) Applicant: LG ELECTRONICS INC., Seoul (KR)
(72) Inventor: Byun, Seong Chan, 137-724 Seocho-gu Seoul (KR); Lee, Eun Sil, Guro-gu Seoul (KR)
(74) Representative: Rupprecht, Kay

(57) **Abstract**

An image processing apparatus is provided. In the image processing apparatus, an image pick-up part obtains an image, an image compensation part stretches gray values of. selected pixels from a main object of the obtained image (the selected pixels lie in a narrower gray value range) to a wider gray value range, and an image output part outputs the compensated image. Therefore, an image is compensated for a user to easily discern an object in the image in a preview mode.

## Description

### BACKGROUND OF THE INVENTION

### Field of the Invention

The present invention relates to an image processing apparatus, and more particularly, to an image processing apparatus capable of obtaining and capturing a high-definition image under low-lit conditions. In more particularly, the present invention relates to an apparatus capable of obtaining a high-brightness and high-definition image in a preview mode before capturing an image.

### Description of the Related Art

As the use of digital imaging apparatus such as digital camcorders and camera phones has increased, the functions of these apparatuses are diversifying and becoming more intelligent.

Accordingly, when the digital imaging apparatus obtains still or moving images, resolution gradually increases, and the images obtained in bright conditions, namely, in daylight or with artificial lighting, are adequate to satisfy the user.

However, there is a strong demand from users wanting to capture high-definition images, not only in normal lighting but also in low-lit conditions, such as in movie theaters, dark rooms, and at night. For example, if a user wishes to capture his favorite star at a concert or a night image with the sea in the background, the image must be captured, not under normal lighting, but under low-lit conditions.

In the past, many ways of capturing high-definition images in such low-lit conditions described above have been suggested. Examples include using a flash, extending the exposure time, and controlling the brightness level.

In the case of using the flash, only an apparatus equipped with a flash can be used. Even with a flash-equipped apparatus, its use is severely restricted due to the disturbance that might be caused to others in a public area (a theater, for example) by the sudden beam of light. Another problem with using a flash is that before a user records an image using a flash, he cannot discern the object in low-light conditions when previewing because the flash does not operate at this time.

In the case of extending the exposure time, the numbers of images per second is reduced; and the user is inconvenienced in his endeavors to manipulate the object and background into a desired composition because of the image' s sensitivity to hand-held movements. Also, the image is difficult to discern when previewing.

A method for controlling a brightness level is disclosed in Korean Patent Application No. 10-1999-059628. The method is to compare a threshold values of the obtained image' s brightness data with a preset brightness level, adjust a gain value to be compensated according to the compared result, and automatically compensate for a gradation of a low-lit image data according to each selected signal, thereby easily regulating a gradation and brightness of the image by controlling the selected signal, even if the condition changes.

However, the aforementioned method of controlling brightness also suffers from the same drawback of relying on low-illumination during preview mode, when a user cannot accurately discern the object.

Because of these problems, the related art image processing apparatus cannot easily capture images in the preview mode under the low-lit conditions. Thus, even if an image is captured, the image would not be clear due to the low-lit conditions.

Furthermore, since a clear image is not clearly displayed in the preview mode under the low-lit conditions, there is a problem in that desired image cannot be clearly discerned.

### SUMMARY OF THE INVENTION

Accordingly, the present invention is directed to an image processing apparatus that substantially obviates one or more problems due to limitations and disadvantages of the related art.

An object of the present invention is to provide an image processing apparatus, which improves the brightness of an image captured in low-lit condition through compensation, thereby obtaining a high-definition image.

Another object of the present invention is to provide an image processing apparatus that enables the viewing of a clear image in preview mode, allowing a user to view and thus capture the image he wants.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an image processing apparatus includes: an image pick-up part for an obtaining image; an image compensation part for arranging the pixels of the obtained image in the form of an image histogram, and altering the gray values of pixels lying within a specific range to compensate the image to produce a high-definition image; and an image output part for outputting the compensated high-definition image.

In another aspect of the present invention, an image processing apparatus includes: an image pick-up part for obtaining an image; an image output part for outputting the obtained image; and an image compensation part for compensating the image obtained by the image pick-up part to output the image through the image output part, wherein the image compensation part has a histogram computation unit for outputting a histogram of the obtained image, a threshold setting unit for setting a specific range of pixels whose gray values are to be altered, and a histogram stretching unit for altering the gray values of the pixels within the specific range to rearrange the altered gray values within a predetermined gray value range.

In a further another aspect of the present invention, an image processing apparatus includes: an image pick-up part for obtaining an image; an image compensation part for stretching gray values of pixels found in a narrower gray range to a wider gray value range, the narrow gray range representing a main object of an image obtained by the image pick-up part; and an image output part for outputting the stretched images.

Another advantage of the present invention is that it solves the problem of a user being unable to discern an object that was captured under low-lit conditions in the display during preview and record modes, which allows for an improvement in the contrast of the image that leads to a high-definition image being obtained.

In addition, along with compensation of gradation, color saturation can also be compensated, which can prevent reduction of color saturation, resulting in images with favorable resolution.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 illustrates an image processing apparatus according to the prior art;
Fig. 2 illustrates the illumination control part found in Fig. 1 in further detail;
Fig. 3 illustrates an example of a pixel histogram of an image obtained under low-lit conditions; and
Figs. 4 and 5 are diagrams illustrating examples of changes in gradation values of low-illumination images.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

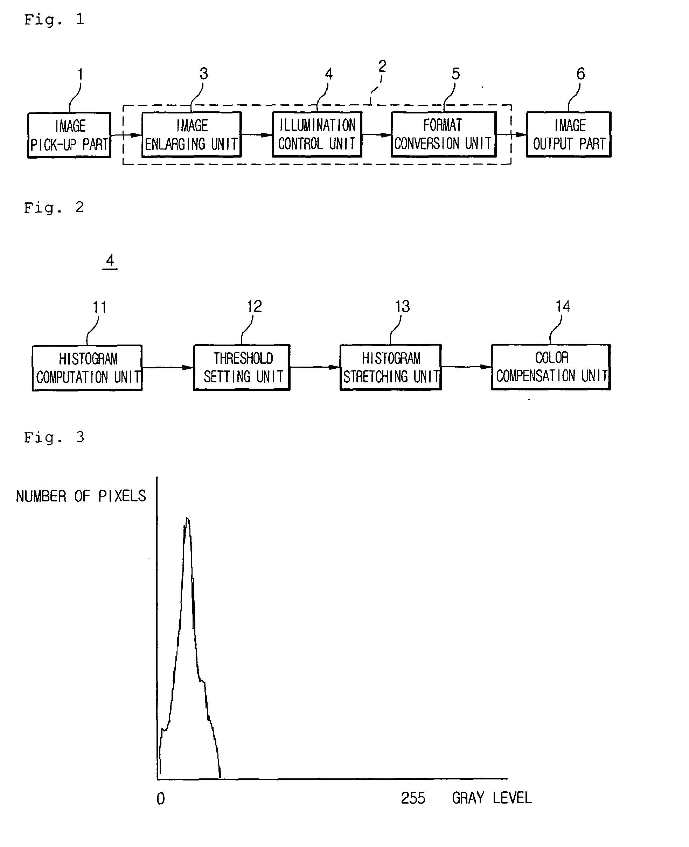

Fig. 1 illustrates a broad outline of an image processing apparatus according to the related art, and Fig. 2 illustrates an illumination control part found in Fig. 1 in further detail.

Referring to Fig. 1, an image processing apparatus includes an image pick-up part 1 that obtains images under low-illumination conditions, an image compensation part 2 that compensates for brightness and color of an image obtained by the image pick-up part 1 in low-illumination conditions, and an image output part 6 that outputs an image compensated by the image compensation part 2.

The image pick-up part 1 is an element that is intended to capture normal images, and can use image sensors such as a CCD (Charge Coupled Device) or CMOS (Complementary Metal Oxide Semiconductor). Since, however, the main feature of the present invention is to transform an image taken under low-lit conditions to a high-definition image, any image referred to below without accompanying qualifiers shall denote an image captured under low-lit conditions.

The image compensation part 2 is a component that improves an image obtained by the image pick-up part 1 under low-lit conditions to a high-definition image. The image compensation part 2 includes an image enlargement part 3, an illumination control unit 4, and a format conversion unit 5.

The image enlargement unit 3 enlarges an obtained image to a predetermined size, according to the zoom magnification specified by a user. Here, the recommended maximum enlargement size of the obtained image is the screen size of the image output part 6. If a user specifies a magnification size of the obtained image that exceeds the specified screen size of the image output part 6, the command is generally rejected, and the obtained image size can be designated as that of the screen size of the image output part 6.

The image enlargement unit 3 allows a user to adjust the zoom magnification, and can optimize the image resolution by adjusting the distance and focal point to the object and enlarging or reducing the image to preset zoom magnifications.
If the settings for the distance and focal point to the object are correct, the user will not have to make further zoom adjustments, and the image enlargement unit 3 may not be required. That is to say, the image enlarging part 3 can be used if the image resolution of the object needs to be adjusted.

If an image obtained under low-lit conditions is enlarged by the image enlargement unit 3 and outputted to the display screen, it will not be easy to discern the object of the image due to the low-illumination.

Accordingly, a procedure before the obtained image is outputted to the preview screen, namely, a process of compensating brightness and color by the illumination control unit 4 is needed.

In general, the gray level dispersion of an image obtained under low-lit conditions lies in a low-level area. Hence, if the pixels lying in these low-level areas are appropriately reassigned to higher areas, the image contrast is improved and the object is more clearly discernable. The illumination control unit 4 of the present invention is configured to perform the above functions.

Generally, the illumination control part 4 controls the frequency distribution of the histogram and performs an operation to improve the illumination. This illumination control part 4, as illustrated by Fig. 2, includes a histogram computation unit 11, a threshold setting unit 12, a histogram stretching unit 13, and a color compensation unit 14.

More specifically, the histogram computation unit 11 outputs a histogram of the image obtained under low-lit conditions that was derived from the image pick-up part 1 and the image enlargement unit 3. Namely, the number of the pixels of the image is outputted with respect to gray level. An example of a pixel histogram outputted at the histogram computation unit 11 is shown in Fig. 3. The pixel histogram is obtained from an image taken under low-lit conditions, and the majority of pixels are allotted to low gradation areas.

Referring to Fig. 3, the histogram computation unit 11 outputs the histogram of the image obtained under low-lit conditions. The histogram shows the number pixels with respect to gray level. In the histogram, the shades of pixels of an image vary between gray values ranging from 0 to 255, and most of the pixels are distributed below the 100 gray value. That is to say, the pixels in the image obtained under low-lit conditions are arranged mostly in low gray level. Accordingly, because there is little difference in illumination between the background and the object, it is difficult to discern the image. Therefore, there is a need to improve the illumination of the pixels composing the main object.

The threshold setting unit 12 sets upper and lower threshold values: a maximum Max value and a minimum Min value. The upper threshold value can be called an upper gray value limit, and the lower threshold value can be called lower gray value limit.

There are many ways to set the Min and Max values. Examples include setting fixed values for the Min and Max or using percentages for the Min and Max values.

In the fixed value setting, specific Min and Max values can be set for an image represented with 0 to 255 gray level. The specific Min and Max values may be set in advance, and the set Min and Max values can be changed if the need arises. For example, fixed specific Min and Max values can be respectively set at 45 and 200.

In the percentage setting of the Min and Max values, the Min and Max values are set, taking into account the percentages of the number of pixels across the gray values in the histogram.

For example, if all the pixels in an image are 100%, and a gray value where the number of the pixels exceeds 5% of the total number of pixels is set as the Min value,

For example, the Min and Max values are set in such a manner that the number of pixels added from 0 gray value to the Min value is about 5% of the total number of pixels, and the number of pixels added from 0 gray value to the Max gray value is about 95% of the total number of pixels.

The histogram stretching unit 13 uses the Min and Max values set by the threshold setting unit 12, and rearranges the pixels in the original image allotted between the Min and Max, in other words, the pixels in the image obtained by the image pick-up part 1 into the predetermined tonal range.

At that point, although there are many ways to rearrange the pixels of the image obtained, the present invention describes two such practical examples.

The first method is to rearrange the number of pixels within the Min and Max values to a predetermined gradation range in a uniform and linear way. Here, although the predetermined gradation range can be set between 0 and 255 gray values, the range does not necessarily have to be fixed. For example, the predetermined gradation range can be between 50 and 255 gray values, and can be adjusted according to the image' s properties or the user' s preferences.

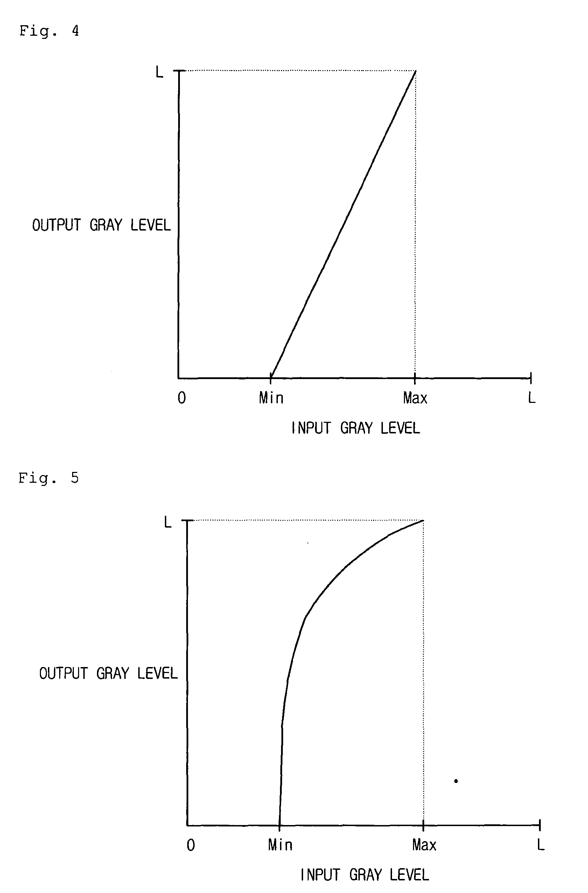

Referring to Fig. 4, the pixels within the Min and Max values of the obtained image can be rearranged linearly and uniformly within all gradation ranges found within the range of 0 to 255 gray values. For example, if the Min value is 45 and the Max value is 200, the pixels found between 45 and 200 can be rearranged uniformly between 0 and 255 gray values. The horizontal axis in Fig. 4 is the gray values of the inputted pixels, and the vertical axis is the gray values of the outputted pixels.

Accordingly, because the pixels distributed in a relatively low gray level area are redistributed to a relatively high gray level area, the contrast can be increased to attain a high-definition image. Of course, this is also possible in preview mode.

Thus, the pixels with values that lie in an appropriate range within the object forming the main part of an obtained image are rearranged within the entire gradation range; and because pixels that induce noise caused by excessively low or high illumination can be ignored, the resolution is improved. Furthermore, the pixels in the narrow gradation range forming the object to be captured will be seen by the user in a wide, compensated gradation range, and this image with compensated illumination can be seen with more clarity and contrast.

Second, there is a method of rearranging the pixels arranged between the Min and Max values set in the threshold setting unit 12 in a curved distribution within a predetermined gradation range. Here, in the description of the present invention, the gradation range is set between 0 and 255 gradations; however, such a gradation range does not need to be fixed. For example the gradation range can be set to between 50 and 250 gray values.

Referring to Fig. 5, we can see that the pixels lying between the set Min and Max values for the obtained image are rearranged in a concentrated curve in a portion of the area between 0 to 255 gray values, namely, the area from 150 to 255 gray values. Therefore, the pixels in the areas of relatively low gradation are redistributed to an area of relatively high gradation (between 150 to 255), obtaining a higher contrast than the first method. The horizontal axis in Fig. 5 represents the gray values of the input pixels, and the vertical axis represents the gray values of the output pixels.

From the many methods for rearrangement, including the two explained above, the optimal method is selected, allowing the histogram to be stretched.

The (L) in Figs. 4 and 5 represents the upper limit of gray level, which is set at 255 gradations in the present invention, but which may be set below or above 255 gray value, depending on requirements.

The descriptions until now were mostly about compensation for gradation. However, if the pixels in low gray level areas are expanded to larger gray level areas as previously described, the resulting color saturation level will comparatively decrease. In this case, the color purity will decline, and the problem of the color appearing faded will emerge.

Therefore, gradation compensation, in conjunction with color compensation is needed.

Accordingly, the color compensation unit 14 in the present invention reflects the rate of change in illumination (Y/Y) through gradation compensation in the histogram stretching unit 13 in the color value and compensates the color.

More specifically, the rate of change in illumination (Y/Y) between the inputted image and the outputted image can be outputted in the histogram stretching unit 13. For example, when the image is in YUV format, and the previous illumination (Y) and the new illumination (Y') are outputted, color compensation can be made with the following formula.

Thus, U' = (Y' /Y)*U, V' =(Y' /Y)*V

Here, Y denotes illumination, and U and V denote color.

Of course, the previously described color compensation can be applied in the same way to images in other formats, such as one in the RGB format.

However, the described color compensation is not necessary, but can be applied when gradation compensation occurs in the histogram stretching unit 13 and the color saturation value decreases.

On the one hand, the format conversion unit 5 changes the image, of which the gray level has been compensated by the histogram stretching unit 13, to a format used in the image output part 6. Of course, the format of an image, of which the color has been compensated by the color compensation unit 14, can be changed if needed.

For example, if the image, of which the gray level has been compensated, is in the YUV format, it can be changed to the RGB format. Furthermore, the image output part 6 outputs the image converted in the format conversion part 5 to the screen.

Image conversion apparatuses such as the one described in the present invention can include camera phones, digital cameras, digital camcorders, cellular phones, and smart phones.

As seen from the previous description, the present invention, from an image obtained under low-lit conditions, designates the pixels in the main part of the image as the pixels between the Min and Max values, and reassigns the designated pixels to a fixed gradation range with a histogram stretching unit. Accordingly, the problem in the prior art of the object being indiscernible when an image captured or obtained under low-lit conditions is displayed in preview mode is overcome, and the contrast can be increased to provide a high-definition image. Also, since pixels having illuminations decidedly different from other pixels, such as noise, are ignored, the user can view an image more clearly.

In addition, because histogram stretching is performed on only pixels that lie within a fixed range depicted by an object comprising the main part of an obtained image, the main part of an obtained image can be made clearer with illumination compensation. Furthermore, by not compensating the illumination of pixels not allotted between the Min and Max values that are not included in the main part of the image, noise is not prominent and the positive result of improved image quality can be obtained.

Furthermore, because the present invention compensates gray level in conjunction with color compensation when required, the reduction of color saturation caused by gradation compensation can be avoided. Accordingly, there is the advantage of a user being able to obtain better image quality.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image processing apparatus comprising:
an image pickup part for an obtaining image;
an image compensation part for compensating the obtained image by changing the gray values of selected pixels of the obtained image, the selected pixel lying within in a specific gray value range, in order to obtain a high-definition image; and
an image output part for outputting the compensated image.

2. The apparatus according to claim 1, wherein the specific range is set to be between a Min (minimum) gray value and a Max (maximum) gray value.

3. The apparatus according to claim 1 or 2, wherein the specific range is set beforehand.

4. The apparatus according to claim 1 or 2, wherein the specific range is set as a ratio of a distribution percentage of the pixels.

5. The apparatus according to claim 1 or 4, wherein the gray values of the selected pixels are changed to lie within the entire gray value range.

6. The apparatus according to any one of claim 1 or claim 4, wherein the selected pixels are rearranged within a predetermined gradation value range in the form of a linear function.

7. The apparatus according to any one of claim 1 or claim 4, wherein the selected pixels are rearranged within a predetermined gray value range in the form of a curved distribution.

8. The apparatus according to claim 7, wherein the selected pixels are rearranged in a concentrated manner within a fixed gradation range.

9. The apparatus according to claim 1, wherein the image output part functions in preview mode.

10. The apparatus according to any one of claims 1 to 9, wherein the image compensation part comprises an image enlargement part for enlarging the image obtained by the image pick-up part.

11. The apparatus according to any one of claims 1 to 10, wherein the image compensation part comprises a format conversion unit for converting the format of the compensated image.

12. The apparatus according to any one of claims 1 to 11, wherein the image compensation part comprises a color compensation unit for compensating the color of the pixels according to a ratio of the brightness scale before and after the compensation of the image.
